# EUROPEAN PATENT APPLICATION

(11) **EP 2 420 966 A1**
(43) Date of publication of application: **22.02.2012**
(21) Application number: 11182317.5
(22) Date of filing: 16.04.2007
(51) Int. Cl.: G06Q 30/00, H04L 29/08, H04L 12/26, H04L 29/06

(54) **Correlating advertisement click events with purchase events**

(30) Priority: 18.04.2006 US 379125
(62) Divisional of application: 07755529.0
(71) Applicant: Ebay, Inc., San Jose, CA 95125 (US)
(72) Inventor: Issen, Daniel A., San Francisco, CA California 94127 (US); Geshel, Vadim, San Francisco, CA California 94110 (US); Mengerink, Matthew, San Jose, CA California 95125 (US)
(74) Representative: Curley, Donnacha John

(57) **Abstract**

A computer-implemented method and system is operable to: serve an advertisement from a merchant site on a o content site; receive a user click event from the content site in response to the advertisement; receive information indicative of a user purchase request on the merchant site; correlate the user click event with the user purchase request; and perform a value transfer with the content site in response to the correlation of the user click event with the user purchase request.

## Description

### BACKGROUND

### 1. Technical Field

This disclosure relates to methods and systems supporting online transactions by a user. More particularly, the present disclosure relates to correlating advertisement click events with purchase events.

### 2. Related Art

An increasingly popular way of delivering Internet advertisements is to tie the presentation of advertisements to particular user behaviors. Such user behaviors include user access to a particular web page, user selection (also called mouse clicking or clicking) of a particular location on a web page, user entry of a particular search string or keyword, and the like. In order to target advertising accurately, advertisers or vendors pay to have their advertisements presented in response to certain kinds of events--that is, their advertisements are presented when particular user behaviors warrant such presentation. If a particular advertisement (ad) leads to some user action, an advertiser may receive remuneration for the ad.

Using other systems and processes on the Web, users can shop and make purchases of goods or services over the Internet. Unfortunately, conventional systems have not been able to create an effective way of connecting these purchase transactions to advertisements that may have led to the purchase transaction.

Some conventional web-based merchants use affiliate programs. In an affiliate program, the merchant itself must track purchase transactions and reward 3^{rd} party affiliates when purchase transactions are completed. This transaction tracking and rewarding process imposes a significant administrative burden on the merchant. Moreover, the tracking/reward functionality must be replicated for each merchant that chooses to use such a system. Current technology does not provide a solution for off-loading this tracking/reward functionality to a 3^{rd} party without risking an increase in fraudulent transactions and a decrease in the time-efficiency of processing purchase transactions.

United States Patent No. 5,948,061 discloses methods and apparatuses for targeting the delivery of advertisements over a network such as the Internet. Statistics are compiled on individual users and networks and the use of the advertisements is tracked to permit targeting of the advertisements of individual users. In response to requests from affiliated sites, an advertising server transmits to people accessing the page of a site an appropriate one of the advertisements based upon profiling of users and networks.

### SUMMARY

The present application provides methods, articles of manufacture and systems in accordance with the claims which follow. Further embodiments, implementations and examples will become apparent from the description which follows.

The application also extends to the following statements:
1. A method comprising: serving an advertisement from a merchant site on a content site; receiving a user click event from the content site in response to the advertisement; receiving information indicative of a user purchase request on the merchant site; correlating the user click event with the user purchase request; and performing a value transfer with the content site in response to the correlation of the user click event with the user purchase request.
2. The method according to statement 1 further including generating a cookie corresponding to the user click event and storing the cookie on a user system.
3. The method according to statement 2 further including searching for the cookie on the user system upon receiving information indicative of a user purchase request on the merchant site.
4. The method according to statement 1 further including performing a value transfer with the merchant site in response to the correlation of the user click event with the user purchase request.
5. The method according to statement 1 further including generating a token corresponding to the user click event and sending the token to the merchant site.
6. The method according to statement 5 further including receiving the token from the merchant site upon receiving information indicative of a user purchase on the merchant site.
7. A method comprising:
   receiving information indicative of a user click event from a content site in response to a user clicking an advertisement served from a merchant site on the content site;
   generating a data object in response to receiving information indicative of the user click event; correlating the user click event with a user purchase request; and performing a value transfer with the content site in response to the correlation of the user click event with the user purchase request.
8. The method according to statement 7 further including storing the data object on a user system.
9. The method according to statement 7 further including obtaining the data object upon receiving information indicative of a user purchase request on the merchant site.
10. The method according to statement 7 further including performing a value transfer with the merchant site in response to the correlation of the user click event with the user purchase request.
11. An article of manufacture comprising at least one machine readable storage medium having one or more computer programs stored there on and operable on one or more computing systems to: serve an advertisement from a merchant site on a content site; receive a user click event from the content site in response to the advertisement; receive information indicative of a user purchase request on the merchant site; correlate the user click event with the user purchase request; and perform a value transfer with the content site in response to the correlation of the user click event with the user purchase request.
12. The article of manufacture according to statement 11 further operable to generate a cookie corresponding to the user click event and to store the cookie on the user's system.
13. The article of manufacture according to statement 12 further operable to search for the cookie on the user's system upon receiving information indicative of a user purchase request on the merchant site.
14. The article of manufacture according to statement 11 further operable to perform a value transfer with the merchant site in response to the correlation of the user click event with the user purchase request.
15. The article of manufacture according to statement 11 further operable to generate a token corresponding to the user click event and to send the token to the merchant site.
16. The article of manufacture according to statement 15 further operable to receive the token from the merchant site upon receiving information indicative of a user purchase on the merchant site.
17. An article of manufacture comprising at least one machine readable storage medium having one or more computer programs stored thereon and operable on one or more computing systems to: receive information indicative of a user click event from a content site in response to a user clicking an advertisement served from a merchant site on the content site; generate a data object in response to receiving information indicative of the user click event; correlate the user click event with a user purchase request; and perform a value transfer with the content site in response to the correlation of the user click event with the user purchase request.
18. The article of manufacture according to statement 17 further operable to store the data object on the user's system.
19. The article of manufacture according to statement 17 further operable to obtain the data object upon receiving information indicative of a user purchase request on the merchant site.
20. The article of manufacture according to statement 17 further operable to perform a value transfer with the merchant site in response to the correlation of the user click event with the user purchase request.
21. A system comprising one or more servers programmed to: a processor; a memory coupled to the processor to store information related to a network node set; and a click event-purchase event correlator, operably coupled with the processor and the memory, operable to serve an advertisement from a merchant site on a content site; receive a user click event from the content site in response to the advertisement; receive information indicative of a user purchase request on the merchant site; correlate the user click event with the user purchase request; and perform a value transfer with the content site in response to the correlation of the user click event with the user purchase request.
22. The system according to statement 21 further operable to generate a cookie corresponding to the user click event and to store the cookie on the user's system.
23. The system according to statement 22 further operable to search for the cookie on the user's system upon receiving information indicative of a user purchase request on the merchant site.
24. The system according to statement 21 further operable to perform a value transfer with the merchant site in response to the correlation of the user click event with the user purchase request.
25. The system according to statement 21 further operable to generate a token corresponding to the user click event and to send the token to the merchant site.
26. The system according to statement 25 further operable to receive the token from the merchant site upon receiving information indicative of a user purchase on the merchant site.
27. A system comprising: a processor; a memory coupled to the processor to store information related to a network node set; and a click event-purchase event correlator, operably coupled with the processor and the memory, operable to receive information indicative of a user click event from a content site in response to a user clicking an advertisement served from a merchant site on the content site; generate a data object in response to receiving information indicative of the user click event; correlate the user click event with a user purchase request; and perform a value transfer with the content site in response to the correlation of the user click event with the user purchase request.
28. The system according to statement 27 further operable to store the data object on the user's system.
29. The system according to statement 27 further operable to obtain the data object upon receiving information indicative of a user purchase request on the merchant site.
30. The system according to statement 27 further operable to perform a value transfer with the merchant site in response to the correlation of the user click event with the user purchase request.

### BRIEF DESCRIPTION OF THE DRAWINGS

Embodiments illustrated by way of example and not limitation in the figures of the accompanying drawings, in which:
Figures 1-4 illustrate block diagrams of a network system and sequences of events in various embodiments.
Figures 5-9 are flow diagrams illustrating the processing flow in various embodiments.
Figure 10 is a block diagram of a network system on which an embodiment may operate.
Figures 11 a and b are block diagrams of a computer system on which an embodiment may operate.

### DETAILED DESCRIPTION

A computer-implemented method and system for correlating advertisement click events with purchase events are disclosed. In the following description, numerous specific details are set forth. However, it is understood that embodiments may be practiced without these specific details. In other instances, well-known processes, structures and techniques have not been shown in detail in order not to obscure the clarity of this description.

As described further below, according to various example embodiments of the disclosed subject matter described and claimed herein, there is provided a system and method for correlating advertisement click events with purchase events.

The system includes a click event-purchase event correlator operable to correlate advertisement click events with purchase events and to trade value with 3^{rd} parties involved in the transaction. Various embodiments are described below in connection with the figures provided herein.

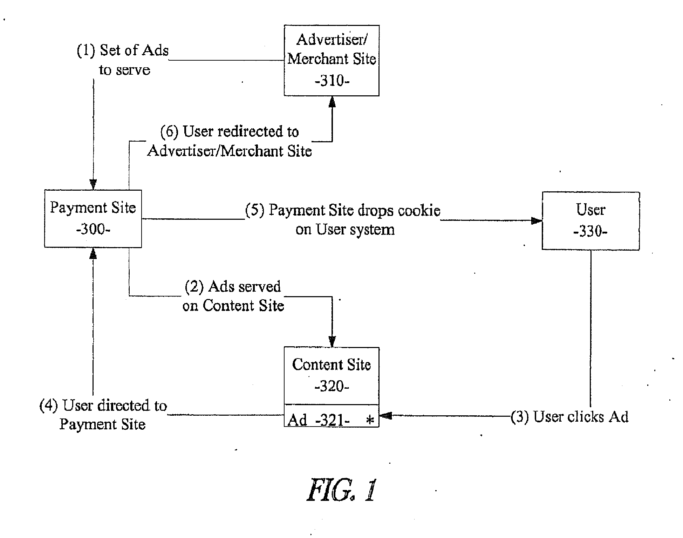

Figures 1-4 illustrate block diagrams of a network system and sequences of events in various embodiments. In one embodiment, the click event-purchase event correlator is implemented in a website that handles payment processing for users and other websites. Referring to Figure 1, an embodiment in which a payment website transfers an HTTP cookie or data object to a user system is illustrated. An HTTP cookie (denoted herein as a cookie) is a packet of information typically sent by a server to a World Wide Web browser. As well known to those of ordinary skill in the art, HTTP cookies are often used for user authentication, user tracking, and maintaining user-specific information such as site preferences and electronic shopping carts. In one example embodiment, the process begins with an advertiser/merchant site 310 sending a set of advertisements (i.e. ads) to the payment site 300. The advertiser/merchant site 310 can be a website operated by a product or service seller, provider, distributor, aggregator, reseller, agent, or the like.

The set of advertisements are designed to entice a user/buyer, such as user 330, to purchase goods and/or services from the advertiser/merchant site 310 or its client, affiliate, or related provider in a sales, lease, rental, or similar purchase transaction.

The payment site 300 is a payment facilitator that handles the transfer of value for the advertiser/merchant site 310 and the user 330 in the purchase transaction. The payment site 300 can also handle the posting of the advertisements from the set of advertisements sent to the payment site 300 from the advertiser/merchant site 310.

The posting of these ads can be accomplished by the payment site 300 sending the advertiser/merchant site 310 ads to be served to one or more content sites, an example of which is illustrated in Figure 1 as content site 320. Each of the served ads can be configured with a link (e.g. URL) or similar reference back to payment site 300. It will be apparent to those of ordinary skill in the art that the set of advertiser/merchant site 310 ads can equivalently be posted on content site 320 by the advertiser/merchant site 310 or some other third-party web site. Once the ads have been served to content site 320 using one of the processes described above, content site 320 can choose to display one or more such ads to users who visit content site 320. A representation of such an ad 321 is illustrated in Figure 1 within block 320. An asterisk symbol "^{∗}", shown in ad 321 represents a soft button, hyperlink, or the like, which can be activated by a user 330 using conventional means. For example, user 330 can mouse-click a portion of the displayed advertisement 321 on content site 320. Presumably, user 330 clicks on ad 321, because he or she may be interested in the product or service offered in ad 321.

When the user 330 clicks ad 321 (e.g. a user click event), user 330 is directed to payment site 300 via the link (e.g. URL) or similar reference previously configured into ad 321. Once the user is directed to payment site 300, several operations on payment site 300 are triggered. First, identity information associated with user 330 is captured. Secondly, time and date information associated with the user 330 click event is saved. Thirdly, other information related to the user click event can be obtained. For example, reference information that identifies the particular advertisement 321 and/or content site 320 can be obtained. Finally, a unique identifier associated with the particular user 330 click event is generated. This user click event unique identifier is used to distinguish a particular user advertisement selection from any other advertisement selection made by this user or other users.

Using the user click event unique identifier, payment site 300 generates a cookie or other data object and transfers the data object to a non-volatile memory storage device on the computer system operated by the user who mouse-clicked the ad 321.

In this example, the cookie or other data object is deposited on the system of user 330. In one embodiment, this cookie or other data object includes the user click event unique identifier. As will be described in more detail below, this data object deposited on the system of user 330 is used to correlate the user click event of ad 321 with a subsequent purchase request made by user 330. Once the cookie or other data object has been deposited on the system of user 330, payment site 300 redirects user 330 to the advertiser/merchant site 310. Thus as described above, payment site 300 serves an advertisement 321 from an advertiser/merchant site 310 on a content site 320, receives a user click event from the content site 320 in response to the selection of advertisement 321, deposits a cookie or data object on the system of user 330, and redirects user 330 to advertiser/merchant site 310.

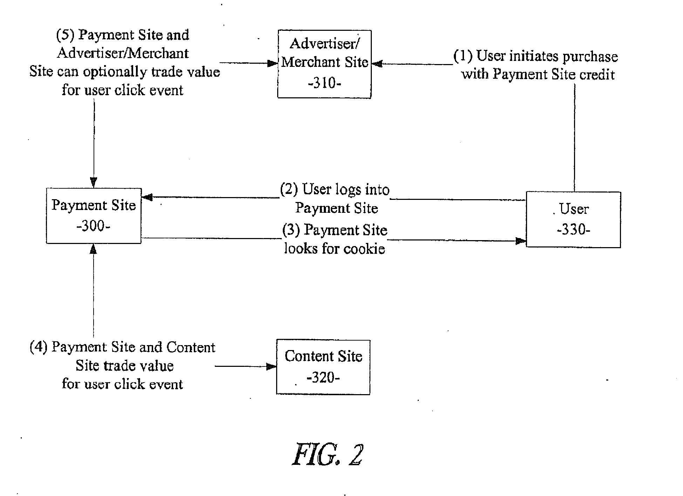

Referring now to Figure 2, a sequence of operations related to a user purchase transaction is illustrated. In a first event, a user 330 initiates a purchase transaction on the advertiser/merchant site 310 using credit provided by payment site 300. In this embodiment, user 330 uses a credit account previously established on payment site 300. In order to use this credit account, user 330 logs into payment site 300 to access the user account. Upon user 330 login at payment site 300, payment site 300 attempts to access (e.g., by searching for) a cookie or data object that may have previously been deposited on the system of user 330 by payment site 300 in the manner described above. If the cookie is not found, the purchase transaction proceeds in the traditional manner. If the cookie is found, the cookie is examined to determine if the user click event unique identifier and other information associated with the user click event correspond to the purchase transaction initiated by user 330. For example, the cookie or data object can be used by payment site 300 to determine if the user 330 is attempting to purchase the product or service offered by the ad 321 previously clicked by user 330. In this manner, the user click event can be correlated to the user purchase request. If such a correlation is made, the payment site 300 credits the content site 320 with a pre-agreed amount of value as a reward for displaying the ad 321 that caused a subsequent purchase by user 330.

Depending on a prior negotiated agreement, payment site 300 and content site 320 trade value for the user click event once a correlation is made by the payment site 300 between the user 330 click event and the user 330 purchase transaction.

Optionally, payment site 300 and advertiser/merchant site 310 can also trade value for the user click event once the correlation is made by the payment site 300. In this manner, various embodiments taught and claimed herein correlate advertisement click events with product/service purchase events.

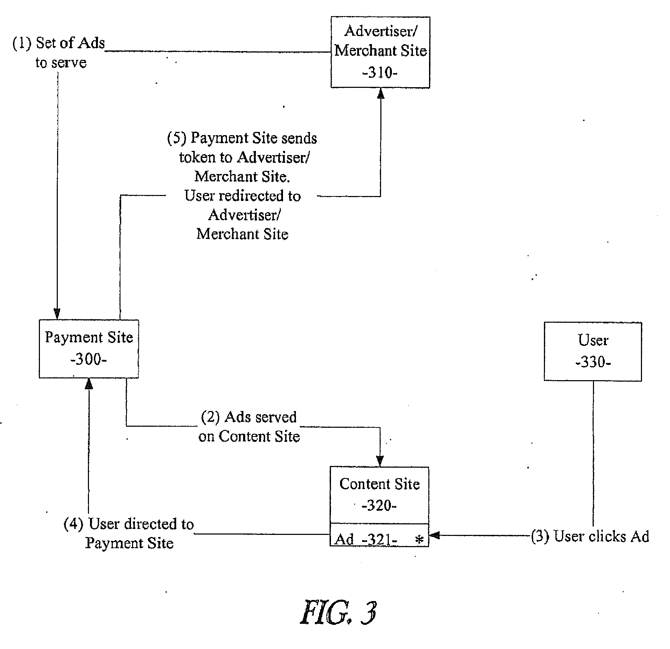

Referring to Figure 3, an embodiment is illustrated in which a payment site transfers a token or data object to an advertiser/merchant system. The process begins with an advertiser/merchant site 310 sending a set of advertisements (i.e. ads) to the payment site 300. The payment site 300 is a payment facilitator that handles the transfer of value for the advertiser/merchant site 310 and the user 330 in the purchase transaction. The payment site 300 can also handle the posting of the advertisements from the set of advertisements sent to the payment site 300 from the advertiser/merchant site 310. The posting of these ads can be accomplished by the payment site 300 sending the advertiser/merchant site 310 ads to be served to one or more content sites, an example of which is illustrated in Figure 3 as content site 320.

Each of the served ads can be configured with a link (e.g. URL) or similar reference back to payment site 300. It will be apparent to those of ordinary skill in the art that the set of advertiser/merchant site 310 ads can equivalently be posted on content site 320 by the advertiser/merchant site 310 or some other third-party web site. Once the ads have been served to content site 320 using one of the processes described above, content site 320 can choose to display one or more such ads to users who visit content site 320. A representation of such an ad 321 is illustrated in Figure 3 within block 320. An asterisk symbol "^{∗}", shown in ad 321 represents a soft button, hyperlink, or the like, which can be activated by a user 330 using conventional means. For example, user 330 can mouse-click a portion of the displayed advertisement 321 on content site 320. Presumably, user 330 clicks on ad 321, because he or she may be interested in the product or service offered in ad 321.

When the user 330 clicks ad 321 (e.g. a user click event), user 330 is directed to payment site 300 via the link (e.g. URL) or similar reference previously configured into ad 321. Once the user is directed to payment site 300, several operations on payment site 300 are triggered. First, identity information associated with user 330 is captured. Secondly, time and date information associated with the user 330 click event is saved. Thirdly, other information related to the user click event can be obtained. For example, reference information that identifies the particular advertisement 321 and/or content site 320 can be obtained. Finally, a unique identifier associated with the particular user 330 click event is generated. This user click event unique identifier is used to distinguish a particular user advertisement selection from any other advertisement selection made by this user or other users.

Using the user click event unique identifier, payment site 300 generates a token or other data object and transfers the token or data object to the advertiser/merchant site 310. In one embodiment, this token or other data object includes the user click event unique identifier. As will be described in more detail below, this token or data object provided to advertiser/merchant site 310 is used to correlate the user click event of ad 321 with a subsequent purchase request made by user 330. Once the token or other data object has been provided to advertiser/merchant site 310, payment site 300 redirects user 330 to the advertiser/merchant site 310. Thus as described above, payment site 300 serves an advertisement 321 from an advertiser/merchant site 310 on a content site 320, receives a user click event from the content site 320 in response to the selection of advertisement 321, sends a token or data object to advertiser/merchant site 310, and redirects user 330 to advertiser/merchant site 310.

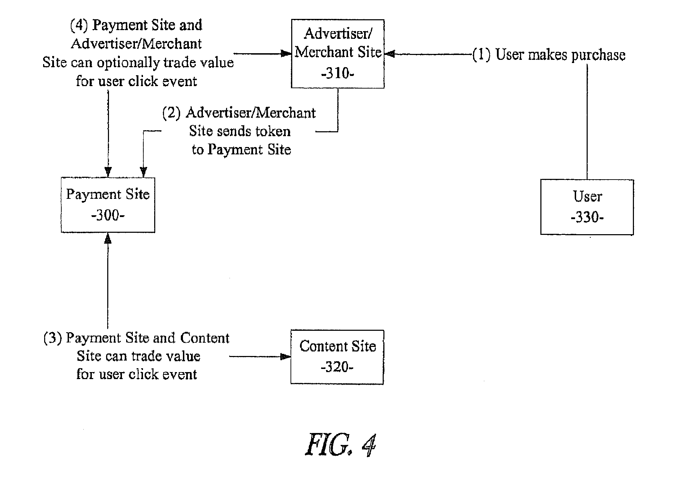

Referring now to Figure 4, a sequence of operations related to a user purchase transaction in another embodiment is illustrated. In a first event, a user 330 completes a purchase transaction in a conventional manner on the advertiser/merchant site 310 using credit provided by a credit card provider, bank, or other 3^{rd} party site. In this embodiment, upon the completion of the purchase transaction by user 330, the advertiser/merchant site 310 attempts to access a token or data object that may have previously been sent to the advertiser/merchant site 310 by payment site 300 in the manner described above. If the token is not found on the advertiser/merchant site 310, the purchase transaction proceeds in the traditional manner. If the token is found, the token is examined to determine if the user click event unique identifier and other information associated with the user click event correspond to the purchase transaction completed by user 330. For example, the token or data object can be used by the advertiser/merchant site 310 to determine if the user 330 purchased the product or service offered by the ad 321 previously clicked by user 330. In this manner, the user click event can be correlated to the user purchase. If such a correlation is made, the advertiser/merchant site 310 sends the token to the payment site 300. Upon receiving the token, the payment site 300 can credit content site 320 with a pre-agreed amount of value as a reward for displaying the ad 321 that caused a subsequent purchase by user 330. Depending on a prior negotiated agreement, payment site 300 and content site 320 can trade value for the user click event once a correlation is made between the user 330 click event and the user 330 purchase transaction. Optionally, payment site 300 and advertiser/merchant site 310 can also trade value for the user click event once the correlation is made between the user 330 click event and the user 330 purchase transaction. In this manner, various embodiments taught and claimed herein correlate advertisement click events with product/service purchase events.

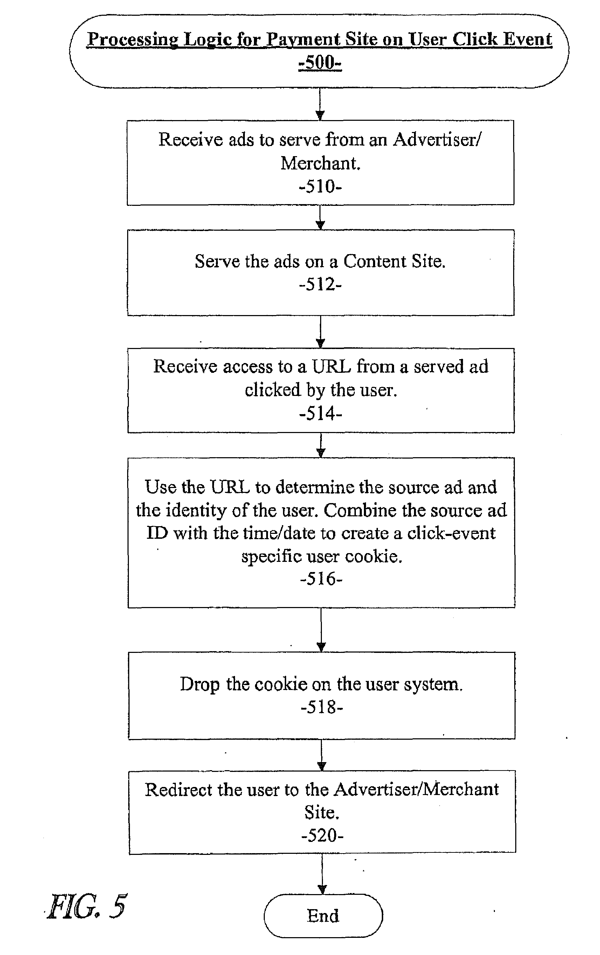

Figures 5-9 are flow diagrams illustrating the processing flow in various embodiments. Referring to Figure 5, an example embodiment of processing operations performed by a payment site is illustrated. In processing block 510, the payment site 300 receives one or more advertisements from an advertiser/merchant site 310. The posting of these ads can be accomplished by the payment site 300 sending the advertiser/merchant site 310 ads to be served to one or more content sites 320 (processing block 512). Each of the served ads can be configured with a link (e.g. URL) or similar reference back to payment site 300. It will be apparent to those of ordinary skill in the art that the set of advertiser/merchant site 310 ads can equivalently be posted on content site 320 by the advertiser/merchant site 310 or some other third-party web site. Once the ads have been served to content site 320 using one of the processes described above, content site 320 can choose to display one or more such ads to users who visit content site 320. A user 330 can mouseclick, or similarly select or activate, a portion of the displayed advertisement 321 on content site 320. When the user 330 clicks ad 321 (e.g. a user click event), user 330 is directed to payment site 300 via the link (e.g. URL) or similar reference previously configured into ad 321. At processing block 514, payment site 300 receives access to the URL from the served ad 321 indicating that user 330 has clicked or similarly selected the ad 321 (i.e. the user click event). Once the payment site 300 receives the user click event, several operations on payment site 300 are triggered. In processing block 516, identity information associated with user 330 is captured. Secondly, time and date information associated with the user 330 click event is saved. Thirdly, other information related to the user click event can be obtained. For example, reference information that identifies the particular advertisement 321 and/or content site 320 can be obtained. Finally, a unique identifier associated with the particular user 330 click event is generated using the information described above (processing block 516). This user click event unique identifier is used to distinguish a particular user advertisement selection from any other advertisement selection made by this user or other users. Using the user click event unique identifier, payment site 300 generates a cookie or other data object (processing block 516) and transfers the data object to a non-volatile memory storage device or memory area on the computer system operated by the user who mouse-clicked the ad 321 (processing block 518). In one embodiment, this cookie or other data object includes the user click event unique identifier. As will be described in more detail below, this data object deposited on the user 330 system is used to correlate the user click event of ad 321 with a subsequent purchase request made by user 330. Once the cookie or other data object has been deposited on the user 330 system, payment site 300 redirects user 330 to the advertiser/merchant site 310 (processing block 520). Thus as described above, payment site 300 serves an advertisement 321 from an advertiser/merchant site 310 on a content site 320, receives a user click event from the content site 320 in response to the selection of advertisement 321, deposits a cookie or data object on the user 330 system, and redirects user 330 to advertiser/merchant site 310.

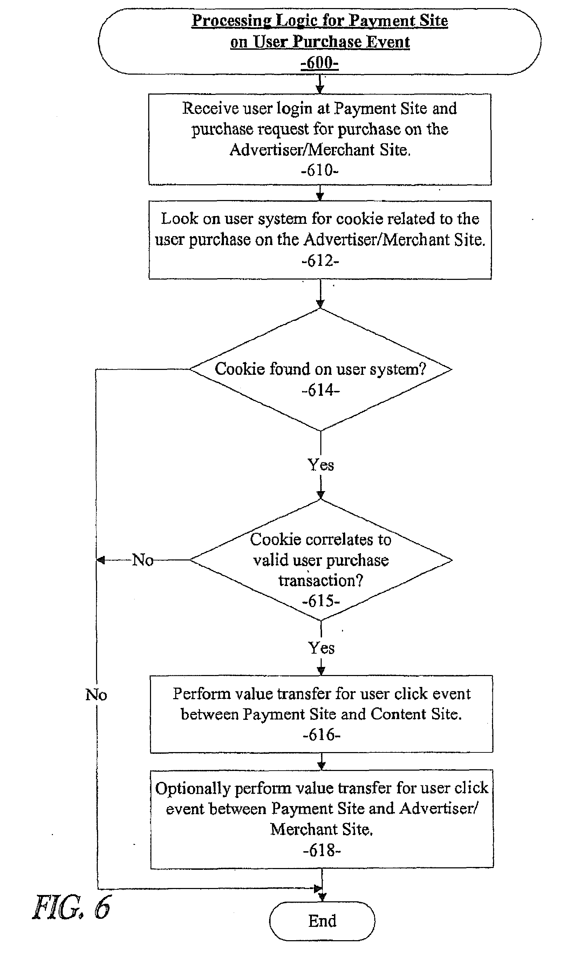

Referring now to Figure 6, a sequence of processing steps related to a user purchase transaction in an example embodiment is illustrated. As described above, a user 330 can initiate a purchase transaction on the advertiser/merchant site 310 using credit provided by payment site 300. In order to use this user/purchaser credit account, user 330 logs into payment site 300 to access the user account. In processing block 610, the payment site 300 receives the user login and the purchase request for purchase of an item or service on the advertiser/merchant site 310. In processing block 612, upon receipt of the user 330 login at payment site 300, payment site 300 attempts to access a cookie or data object that may have previously been deposited on the user 330 system by payment site 300 in the manner described above. If the cookie is not found (decision block 614), the purchase transaction proceeds in the traditional manner and processing illustrated in Figure 6 terminates at the End bubble. If the cookie is found (decision block 614), the cookie is examined to determine if the user click event unique identifier and other information associated with the user click event correspond to the purchase transaction initiated by user 330 (decision block 615). For example, the cookie or data object can be used by payment site 300 to determine if the user: 330 is attempting to purchase the product or service offered by the ad 321 previously clicked by user 330. In this manner, the user click event can be correlated to the user purchase request. If such a correlation cannot be made (decision block 615), the purchase transaction proceeds in the traditional manner and processing illustrated in Figure 6 terminates at the End bubble. If such a correlation can be made (decision block 615), the payment site 300 credits the content site 320 with a pre-agreed amount of value as a reward for displaying the ad 321 that caused a subsequent purchase by user 330 (processing block 616). Depending on a prior negotiated agreement, payment site 300 and content site 320 trade value for the user click event once a correlation is made by the payment site 300 between the user 330 click event and the user 330 purchase transaction. Optionally, payment site 300 and advertiser/merchant site 310 can also trade value for the user click event once the correlation is made by the payment site 300 (processing block 618). In this manner, various embodiments taught and claimed herein correlate advertisement click events with product/service purchase events.

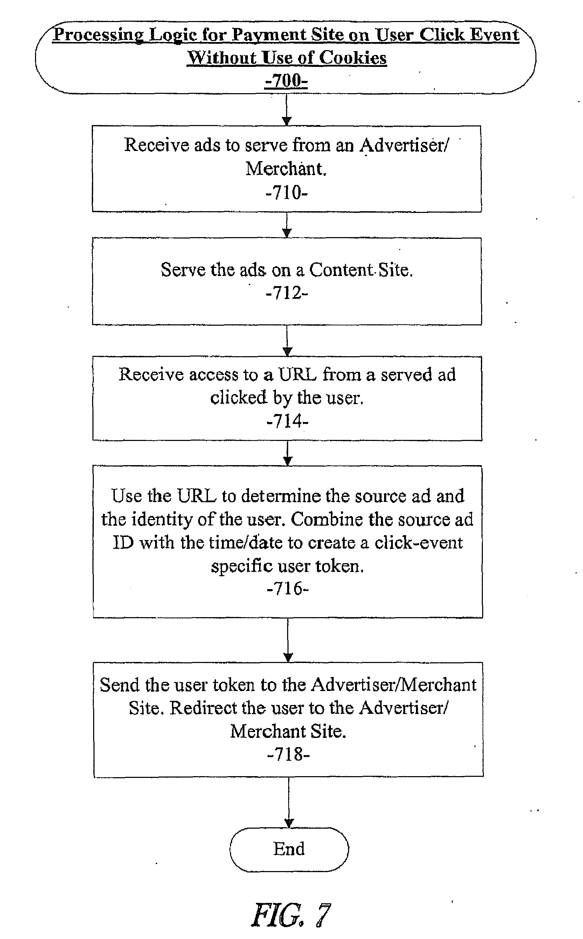

Referring now to Figure 7, another example embodiment of processing operations performed by a payment site is illustrated. In processing block 710, the payment site 300 receives one or more advertisements from an advertiser/merchant site 310. The posting of these ads can be accomplished by the payment site 300 sending the advertiser/merchant site 310 ads to be served to one or more content sites 320 (processing block 712). Each of the served ads can be configured with a link (e.g. URL) or similar reference back to payment site 300. It will be apparent to those of ordinary skill in the art that the set of advertiser/merchant site 310 ads can equivalently be posted on content site 320 by the advertiser/merchant site 310 or some other third-party web site. Once the ads have been served to content site 320 using one of the processes described above, content site 320 can choose to display one or more such ads to users who visit content site 320. A user 330 can mouseclick, or similarly select or activate, a portion of the displayed advertisement 321 on content site 320. When the user 330 clicks ad 321 (e.g. a user click event), user 330 is directed to payment site 300 via the link (e.g. URL) or similar reference previously configured into ad 321. At processing block 714, payment site 300 receives access to the URL from the served ad 321 indicating that user 330 has clicked or similarly selected the ad 321 (i.e. the user click event). Once the payment site 300 receives the user click event, several operations on payment site 300 are triggered. In processing block 716, identity information associated with user 330 is captured. Secondly, time and date information associated with the user 330 click event is saved. Thirdly, other information related to the user click event can be obtained. For example, reference information that identifies the particular advertisement 321 and/or content site 320 can be obtained. Finally, a unique identifier associated with the particular user 330 click event is generated using the information described above (processing block 716). This user click event unique identifier is used to distinguish a particular user advertisement selection from any other advertisement selection made by this user or other users. Using the user click event unique identifier, payment site 300 generates a token or other data object (processing block 716) and transfers the token or data object to the advertiser/merchant site 310 (processing block 718). In one embodiment, this token or other data object includes the user click event unique identifier. As will be described in more detail below, this data object deposited with the advertiser/merchant site 310 is used to correlate the user click event of ad 321 with a subsequent purchase transaction made by user 330. Once the token or other data object has been deposited with the advertiser/merchant site 310, payment site 300 redirects user 330 to the advertiser/merchant site 310 (processing block 718). Thus as described above, payment site 300 serves an advertisement 321 from an advertiser/merchant site 310 on a content site 320, receives a user click event, from the content site 320 in response to the selection of advertisement 321, deposits a token or data object with the advertiser/merchant site 310, and redirects user 330 to advertiser/merchant site 310.

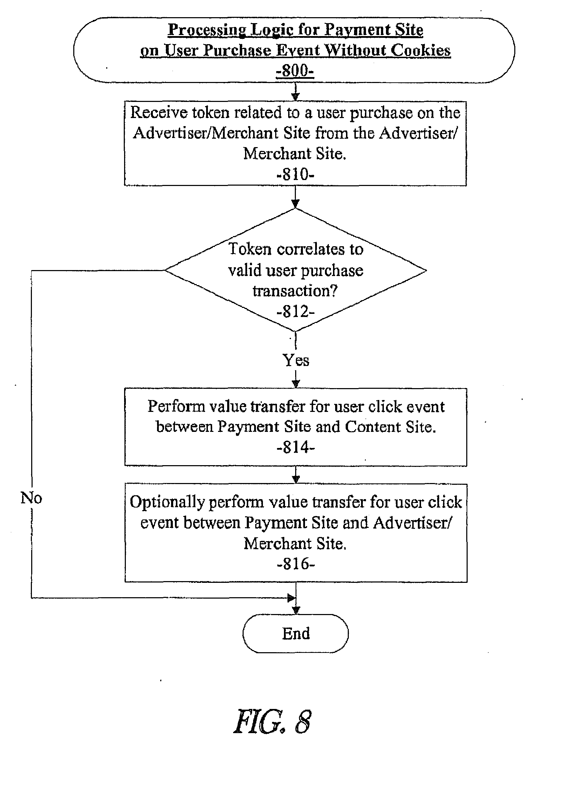

Referring now to Figure 8, a sequence of processing steps related to a user purchase transaction in another example embodiment is illustrated. As described above in connection with Figure 6, a user 330 can initiate a purchase transaction on the advertiser/merchant site 310 using credit provided by payment site 300. In this example embodiment, the user 330 can initiate a Purchase transaction on advertiser/merchant site 310 using credit provided by any conventional credit provider or with any conventional type of value provided to advertiser/merchant site 310 in exchange for the purchased good or service. In processing block 810, the payment site 300 receives a notification from the advertiser/merchant site 310 that user 330 has completed a purchase transaction for purchase of an item or service on the advertiser/merchant site 310. This notification from the advertiser/merchant site 310 includes the token or data object that may have previously been sent to the advertiser/merchant site 310 by payment site 300 in the manner described above. In decision block 812, the token is examined to determine if the user click event unique identifier and other information associated with the user click event correspond to the purchase transaction completed by user 330. For example, the token or data object can be used by payment site 300 to determine if the user 330 purchased the product or service offered by the ad 321 previously clicked by user 330. In this manner, the user click event can be correlated to the user purchase request. If such a correlation cannot be made (decision block 812), the purchase transaction proceeds in the traditional manner and processing illustrated in Figure 8 terminates at the End bubble. If such a correlation can be made (decision block 812), the payment site 300 credits the content site 320 with a pre-agreed amount of value as a reward for displaying the ad 321 that caused a subsequent purchase by user 330 (processing block 814). Depending on a prior negotiated agreement, payment site 300 and content site 320 trade value for the user click event once a correlation is made by the payment site 300 between the user 330 click event and the user 330 purchase transaction. Optionally, payment site 300 and advertiser/merchant site 310 can also trade value for the user click event once the correlation is made by the payment site 300 (processing block 816). In this manner, various embodiments taught and claimed herein correlate advertisement click events with product/service purchase events.

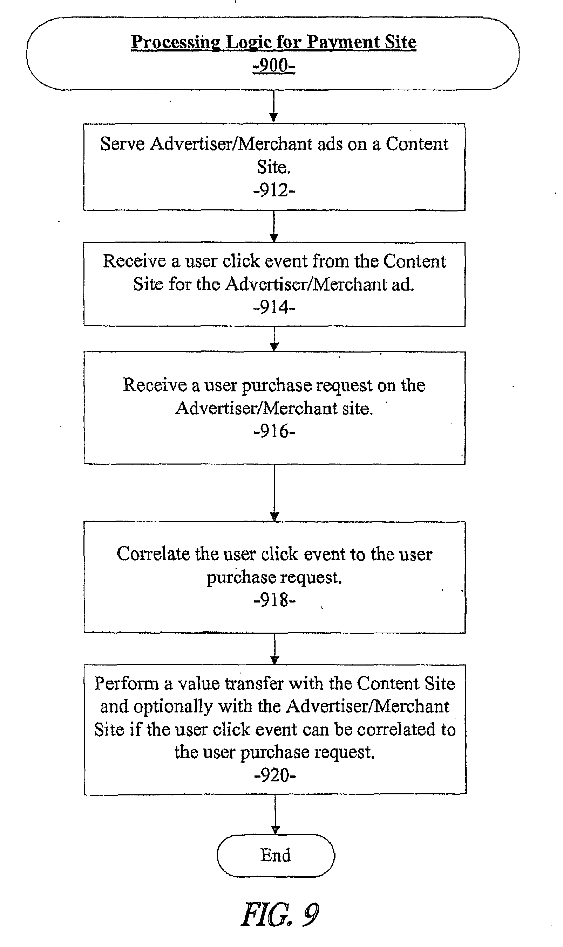

Referring now to Figure 9, a composite of processing operations at payment site 300 is illustrated. In processing block 912, payment site 300 serves one or more advertisements from advertiser/merchant site 310 on one or more content sites 320 (processing block 912). In processing block 914, payment site 300 receives a user click event indicating that user 330 has clicked or similarly selected the ad 321.

Once the payment site 300 receives the user click event, in processing block 916, the payment site 300 receives a notification from the advertiser/merchant site 310 that user 330 has initiated or completed a purchase transaction for purchase of an item or service on the advertiser/merchant site 310. In processing block 918, a data object is used to correlate the user click event of ad 321 with the subsequent purchase transaction made by user 330. If such a correlation can be made (processing block 920), the payment site 300 credits the content site 320 with a pre-agreed amount of value as a reward for displaying the ad 321 that caused a subsequent purchase by user 330 (processing block 920). Optionally, payment site 300 and advertiser/merchant site 310 can also trade value for the user click event once the correlation is made by the payment site 300 (processing block 920). In this manner, various embodiments taught and claimed herein correlate advertisement click events with product/service purchase events.

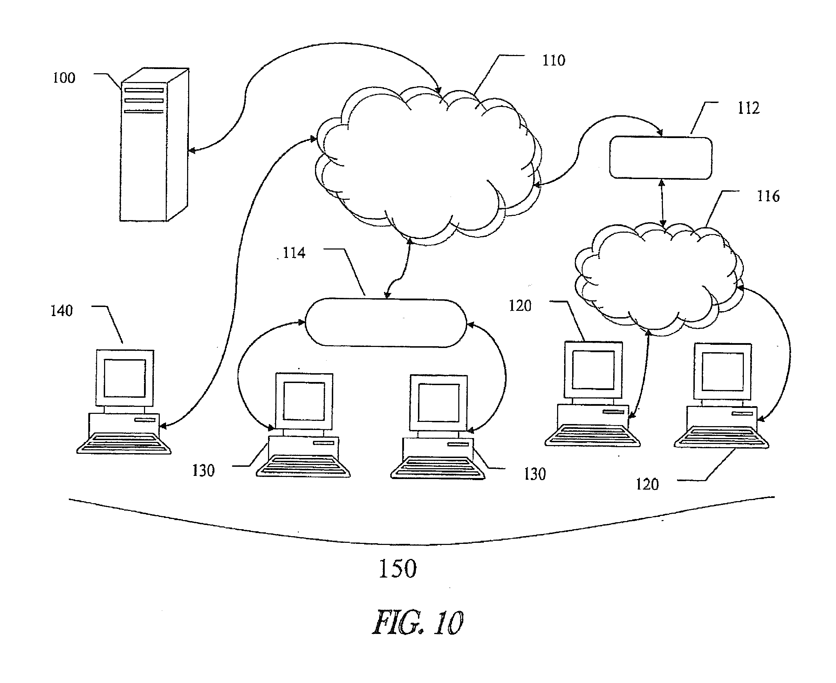

Referring now to Figure 10, a diagram illustrates a network environment in which various example embodiments may operate. In this conventional network architecture, a server computer system 100 is coupled to a wide-area network 110.

Wide-area network 110 includes the Internet, or other proprietary networks, which are well known to those of ordinary skill in the art. Wide-area network 110 may include conventional network backbones, long-haul telephone lines, Internet service providers, various levels of network routers, and other conventional means for routing data between computers. Using conventional network protocols, server 100 may communicate through wide-area network 110 to a plurality of client computer systems 120, 130, 140 connected through wide-area network 110 in various ways.

For example, client 140 is connected directly to wide-area network 110 through direct or dial-up telephone or other network transmission line. Alternatively, clients 130 may be connected through wide-area network 110 using a modem pool 114. A conventional modem pool 114 allows a plurality of client systems to connect with a smaller set of modems in modem pool 114 for connection through wide-area network 110. In another alternative network topology, wide-area network 110 is connected to a gateway computer 112. Gateway computer 112 is used to route data to clients 120 through a local area network (LAN) 116. In this manner, clients 120 can communicate with each other through local area network 116 or with server 100 through gateway 112 and wide-area network 110.

Using one of a variety of network connection means, server computer 100 can communicate with client computers 150 using conventional means. In a particular implementation of this network configuration, a server computer 100 may operate as a web server if the Internet's World-Wide Web (WWW) is used for wide area network 110. Using the HTTP protocol and the HTML coding language across wide-area network 110, web server 100 may communicate across the World-Wide Web with clients 150. In this configuration, clients 150 use a client application program known as a web browser such as the Internet Explorer™ published by Microsoft Corporation of Redmond, Washington, the user interface of America OnLine™, or the web browser or HTML renderer of any other supplier. Using such conventional browsers and the World-Wide Web, clients 150 may access image, graphical, and textual data provided by web server 100 or they may run Web application software. Conventional means exist by which clients 150 may supply information to web server 100 through the World Wide Web 110 and the web server 100 may return processed data to clients 150.

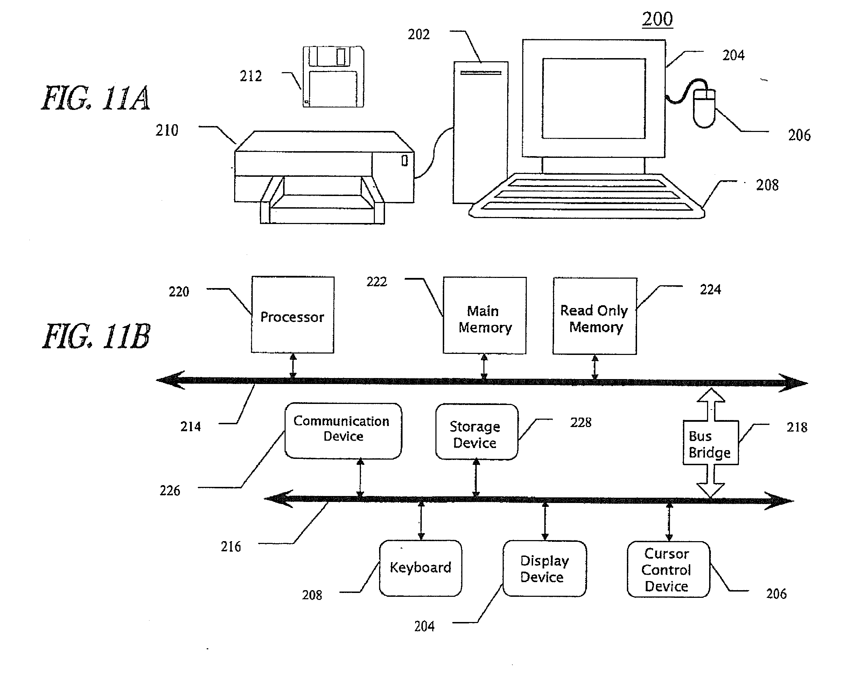

Having briefly described one embodiment of the network environment in which an example embodiment may operate, Figures 11 a and 11b show an example of a computer system 200 illustrating an exemplary client 150 or server 100 computer system in which the features of an example embodiment may be implemented. Computer system 200 is comprised of a bus or other communications means 214 and 216 for communicating information, and a processing means such as processor 220 coupled with bus 214 for processing information. Computer system 200 further comprises a random access memory (RAM) or other dynamic storage 'device 222 (commonly referred to as main memory), coupled to bus 214 for storing information and instructions to be executed by processor 220. Main memory 222 also may be used for storing temporary variables or other intermediate information during execution of instructions by processor 220. Computer system 200 also comprises a read only memory (ROM) and/or other static storage device 224 coupled to bus 214 for storing static information and instructions for processor 220.

An optional data storage device 228 such as a magnetic disk or optical disk and its corresponding drive may also be coupled to computer system 200 for storing information and instructions. Computer system 200 can also be coupled via bus 216 to a display device 204, such as a cathode ray tube (CRT) or a liquid crystal display (LCD), for displaying information to a computer user. For example, image, textual, video, or graphical depictions of information may be presented to the user on display device 204. Typically, an alphanumeric input device 208, including alphanumeric and other keys is coupled to bus 216 for communicating information and/or command selections to processor 220. Another type of user input device is cursor control device 206, such as a conventional mouse, trackball, or other type of cursor direction keys for communicating direction information and command selection to processor 220 and for controlling cursor movement on display 204.

Alternatively, the client 150 can be implemented as a network computer or thin client device. Client 150 may also be a lap top or palm-top computing device, such as the Palm Pilot™. Client 150 could also be implemented in a robust cellular telephone, where such devices are currently being used with Internet microbrowsers.

Such a network computer or thin client device does not necessarily include all of the devices and features of the above-described exemplary computer system; however, the functionality of an example embodiment or a subset thereof may nevertheless be implemented with such devices.

A communication device 226 is also coupled to bus 216 for accessing remote computers or servers, such as web server 100, or other servers via the Internet, for example. The communication device 226 may include a modem, a network interface card, or other well-known interface devices, such as those used for interfacing with Ethernet, Token-ring, or other types of networks. In any event, in this manner, the computer system 200 may be coupled to a number of servers 100 via a conventional network infrastructure such as the infrastructure illustrated in Figure 10 and described above.

The system of an example embodiment includes software, information processing hardware, and various processing steps, which will be described below.

The features and process steps of example embodiments may be embodied in articles of manufacture as machine or computer executable instructions. The instructions can be used to cause a general purpose or special purpose processor, which is programmed with the instructions to perform the steps of an example embodiment. Alternatively, the features or steps may be performed by specific hardware components that contain hard-wired logic for performing the steps, or by any combination of programmed computer components and custom hardware components. While embodiments are described with reference to the Internet, the method and apparatus described herein is equally applicable to other network infrastructures or other data communications systems.

Various embodiments are described herein. In particular, the use of embodiments with various types and formats of user interface presentations and/or application programming interfaces may be described. It will be apparent to those of ordinary skill in the art that alternative embodiments of the implementations described herein can be employed and still fall within the scope of the claimed invention. In the detail herein, various embodiments are described as implemented in computer-implemented processing logic denoted sometimes herein as the "Software". As described above, however, the claimed invention is not limited to a purely software implementation.

Thus, a computer-implemented method and system for correlating advertisement click events with purchase events are disclosed. While the present invention has been described in terms of several example embodiments, those of ordinary skill in the art will recognize that the present invention is not limited to the embodiments described, but can be practiced with modification and alteration within the scope of the appended claims. The description herein is thus to be regarded as illustrative instead of limiting.

## Claims

1. A computer-implemented method comprising:
receiving, at a payment site, information indicative of a user selection event from a content site in response to a user selecting an advertisement, the content site being a different site than the payment site;
receiving, at the payment site, information indicative of a user transaction request on a merchant site, the merchant site being a different site than the payment site; and
using a processor, at the payment site, to correlate the user selection event with the user transaction request and to generate a token associated with the user selection event and the user transaction request.

2. The method as in claim 1 including:
requesting a value transfer with the content site in response to the correlation of the user selection event with the user transaction request.

3. The method as in claim 1 including:
requesting a value transfer with the merchant site in response to the correlation of the user selection event with the user transaction request.

4. The method as in claim 1 including serving the advertisement on the content site.

5. The method as in claim 1 including:
requesting a value transfer with a site sourcing the advertisement in response to the correlation of the user selection event with the user transaction request.

6. The method as in claim 1 wherein the information indicative of a user selection event is received from the content site.

7. The method as in claim 1 including generating a token associated with the user transaction request.

8. The method as in claim 7 including sending the token to the merchant site, the token being used at the merchant site to correlate the user transaction request with a user selection of the advertisement associated with the user transaction request.

9. An apparatus comprising:
means for receiving, at a payment site, information indicative of a user selection event from a content site in response to a user selecting an advertisement, the content site being a different site than the payment site;
means for receiving, at the payment site, information indicative of a user transaction request on a merchant site, the merchant site being a different site than the payment site; and
means for using a processor, at the payment site, to correlate the user selection event with the user transaction request and to generate a token associated with the user selection event and the user transaction request.

10. The apparatus as in claim 9 including:
means for requesting a value transfer with the content site in response to the correlation of the user selection event with the user transaction request.

11. The apparatus as in claim 9 including:
means for requesting a value transfer with the merchant site in response to the correlation of the user selection event with the user transaction request.

12. The apparatus as in claim 9 including means for serving the advertisement on the content site.

13. The apparatus as in claim 9 including:
means for requesting a value transfer with a site sourcing the advertisement in response to the correlation of the user selection event with the user transaction request.

14. The apparatus as in claim 9 wherein the information indicative of a user selection event is received from the content site.

15. The apparatus as in claim 9 including means for generating a token associated with the user transaction request.

16. The apparatus as in claim 15 including means for sending the token to the merchant site, the token being used at the merchant site to correlate the user transaction request with a user selection of the advertisement associated with the user transaction request.
